# EUROPÄISCHE PATENTSCHRIFT

(11) **EP 3 702 811 B1**
(45) Veröffentlichungstag und Bekanntmachung des Hinweises auf die Patenterteilung: **18.02.2026**
(21) Anmeldenummer: 19159479.5
(22) Anmeldetag: 26.02.2019
(51) Int. Cl.: G01S 5/02, G01S 5/04, H04K 3/00, G01S 19/21, G07B 15/06, G01S 5/14

(54) **SENSORNETZWERK ZUM DETEKTIEREN, LOKALISIEREN UND VERFOLGEN VON MOBILEN EINHEITEN**
SENSOR NETWORK FOR DETECTING, LOCATING AND TRACKING MOBILE UNITS
RÉSEAU DE DÉTECTEURS DESTINÉ À LA DÉTECTION, À LA LOCALISATION ET AU SUIVI DES UNITÉS MOBILES

(43) Veröffentlichungstag der Anmeldung: 02.09.2020
(73) Patentinhaber: Airbus Defence and Space GmbH, 82024 Taufkirchen (DE)
(72) Erfinder: Stais, Tobias, 82024 Taufkirchen (DE); Franke, Andre, 82024 Taufkirchen (DE); Semann, Mika, 82024 Taufkirchen (DE)
(74) Vertreter: LKGLOBAL Partnerschaftsgesellschaft mbB

(56) Entgegenhaltungen:
- DE-A1- 102014 108 418
- DE-A1- 102014 218 081
- US-A1- 2013 310 068

## Beschreibung

### TECHNISCHES GEBIET

Es ist ein System zum Ermitteln der Position einer zu verfolgenden mobilen Einheit beschrieben. Das System ermöglicht es insbesondere, die Position einer zu verfolgenden mobilen Einheit, beispielsweise einem Kraftfahrzeug, deren Positionsermittlungskomponenten und Positionsmitteilungskomponenten in ihrer bestimmungsgemäßen Funktion von einer in der zu verfolgenden mobilen Einheit angebrachten Störquelle gezielt beeinträchtigt sind, mittels eines Sensornetzwerks zu detektieren.

### TECHNISCHER HINTERGRUND

Um das Entwenden von Fahrzeugen gegen den Willen des rechtmäßigen Eigentümers aufzuklären, sind in manchen Fahrzeugen Funktionseinheiten enthalten, welche die Position des Fahrzeugs ermitteln und über ein Kommunikationsnetz an einen vorgebbaren Empfänger (z.B. Eigentümer, Hersteller, Dienstleister) übertragen, um das Auffinden des Fahrzeugs zu ermöglichen. Somit ist es möglich, über diese übertragenen Informationen die Position und die Bewegung eines gesuchten Fahrzeugs zu ermitteln.

Es sind Maßnahmen bekannt, welche darauf abzielen, die Arbeitsweise dieser Funktionseinheiten zum Orten eines Fahrzeugs zu stören. Solche Maßnahmen können darauf abzielen, ein Ortungssignal so zu stören, dass eine Positionsermittlungseinheit des entwendeten Fahrzeugs seine Position nicht mehr ermitteln kann. Alternativ kann der Positionsermittlungseinheit ein falsches Positionssignal übermittelt werden, indem das gefälschte Positionssignal das tatsächliche Positionssignal überlagert. Eine weitere Möglichkeit besteht darin, das Sendesignal zum Übertragen der Position des Fahrzeugs zu stören, beispielsweise durch Signalüberlagerung.

Als Positionsermittlungseinheit wird häufig ein Empfänger für Satellitennavigationssignale genutzt. Beispiele für satellitenbasierte Positionsermittlungssysteme sind GPS und Galileo. Entsprechende Empfänger können allgemein als GNSS-Empfänger bezeichnet werden, wobei GNSS für Globales Navigationssatellitensystem bzw. Global Navigation Satellite System steht.

Aus der EP 2 535 737 A1 ist ein System und ein Verfahren zum Ermitteln der Position eines in einem Kraftfahrzeug angeordneten GNSS-Empfängers, dessen bestimmungsgemäße Funktion von einer Störquelle in einem Kraftfahrzeug gezielt beeinträchtigt ist, mittels eines Sensornetzwerks beschrieben. Das Sensornetzwerk enthält eine Vielzahl von Sensoren, welche an bestimmten Verkehrswegepunkten angeordnet sind, um ein daran vorbeifahrendes Fahrzeug mit Störquelle zu detektieren und dadurch ein Bewegungsprofil eines Fahrzeugs mit Störquelle zu ermitteln.

DE 10 2014 218 081 A1 beschreibt eine Vorrichtung zum Melden von GNSS-Störquellen, umfassend eine Empfängereinheit zum Empfangen eines Signals in einem wählbaren GNSS-Frequenzband, eine Charakterisierungseinheit zum Auswerten einer empfangenen Signalcharakteristik aus dem empfangenen Signal und zum Bestimmen einer Abweichung der empfangenen Signalcharakteristik von einer erwarteten Signalcharakteristik, eine Auswertungseinheit zum Erfassen von Daten der Abweichung der empfangenen Signalcharakteristik, und eine Übertragungseinheit zum zumindest mittelbaren Melden der Daten an eine Auswertungsinstanz.

US 2013/0310068 A1 beschreibt ein System mit einer Mehrzahl von Trägereinheiten, welche jeweils eine Sensoreinheit, eine Positionsermittlungseinheit, eine Sende-Empfangseinheit und eine Verarbeitungseinheit aufweisen. Die Trägereinheiten sind ausgestaltet, ein Störsignal an eine Zentrale weiterzuleiten.

DE 10 2014 108 418 A1 beschreibt ein Verfahren und ein System zum Erfassen einer Einrichtung, die dazu ausgestaltet ist, ein Signal eines Navigationssystems zu stören. Hierbei wird ein Funksignal erfasst und seine Geeignetheit geprüft, ein Signal eines Navigationssystems zu stören. Sodann wird der Bereich, aus dem das Funksignal gesendet wird, ermittelt und optisch erfasst. Letztlich wird die optische Erfassung aufgezeichnet und die Signalcharakteristik analysiert. Die optische Erfassung wird mit der aufgezeichneten Signalcharakteristik verknüpft.

### KURZDARSTELLUNG

Es kann als Aufgabe betrachtet werden, das Erkennen der Position von mobilen Störquellen zu verbessern, beispielsweise indem der Abdeckungsbereich eines Sensornetzwerks zum Erkennen der Position von mobilen Störquellen erhöht wird.

Diese Aufgabe wird mit einem Gegenstand gemäß den Merkmalen des unabhängigen Patentanspruchs 1 gelöst. Weiterbildungen ergeben sich aus den Unteransprüchen.

Das System eignet sich allgemein, die Bewegung eines Störsenders zu verfolgen. Dabei wird von der Position der Trägereinheit, deren Sensoreinheit ein Störsignal identifiziert, auf die Position der Störquelle (oder Störsender) geschlossen. Typischerweise hat ein Störsender eine vergleichsweise geringe Sendeleistung, so dass das Störsignal nur über kurze Distanzen (einige 10 Meter bis hin zu 100 Meter oder ein paar 100 Meter) überhaupt detektiert werden kann. Wird also ein Störsignal detektiert, bedeutet dies, dass sich die Störquelle in einem Radius um die Sensoreinheit befindet, welcher der Sendereichweite der Störquelle entspricht. Diese Information ist oftmals ausreichend, um ein unrechtmäßig entwendetes Fahrzeug nachverfolgen und auffinden zu können, indem die Informationen über das Detektieren der zu verfolgenden mobilen Einheit von mehreren Trägereinheiten zusammengeführt werden. In anderen Worten wird das zu verfolgende Fahrzeug (die zu verfolgende mobile Einheit) indirekt geortet, indem die Störquelle von mindestens einer Trägereinheit, bevorzugt von mehreren Trägereinheiten geortet wird, so dass es möglich ist, eine Position der zu verfolgenden mobilen Einheit zu ermitteln oder eine Bewegung der zu verfolgenden mobilen Einheit nachzuverfolgen. Das Sensornetzwerk wird von einer Mehrzahl von Trägereinheiten aufgespannt. Jede Trägereinheit ist mit ihren Funktionskomponenten in der Lage, eine Störquelle zu detektieren (über die Sensoreinheit), die eigene Position zu ermitteln (über die Positionsermittlungseinheit der Trägereinheit), und Informationen über das Störsignal und die Position der Trägereinheit an ein zentrales Verarbeitungselement, den vorgesehen Empfänger der Informationen, zu übertragen (mittels der Sende-/Empfangseinheit).

Die Sensoreinheit ist insbesondere ausgeführt, elektromagnetische Wellen in einem vorgebbaren Frequenzbereich sowie Eigenschaften der elektromagnetischen Wellen, insbesondere ein Frequenzspektrum und/oder eine Leistung, zu erfassen. Eine Störquelle kann beispielsweise ein Jammer oder ein Spoofer sein. Jammer unterbinden die Erfassung und das Verarbeiten/Nutzens eines Signals, indem das Nutzsignal überlagert wird. Beispielsweise überlagern Jammer ein von Satelliten ausgesendetes GNSS-Signal und stören damit die Positionsbestimmung durch den in dem Kraftfahrzeug angeordneten GNSS-Empfänger. Spoofer senden ein falsches GNSS-Signal aus, wobei dieses durch den in dem zu verfolgenden Kraftfahrzeug angeordneten GNSS-Empfänger (Positionsermittlungseinheit) als ein reguläres von einem Satelliten gesendetes GNSS-Signal interpretiert wird. Hierdurch ermittelt der GNSS-Empfänger eine falsche Position. Diese falsche Position wird dann zwar an den vorgegebenen Empfänger der Information übertragen, allerdings ist die Information wertlos.

Das hier beschriebene System ermöglicht es nun, dass mittels der Sensoreinheiten der Trägereinheiten ein von der Störquelle abgegebenes Störsignal detektiert wird. Unter einem Störsignal wird jede Art von Signal verstanden, das von der Störquelle abgegeben wird. Es kann sich somit um ein Signal handeln, das den Empfang regulärer GNSS-Signale von Satelliten unterbindet oder ein reguläres GNSS-Signal vortäuscht. Anschließend werden die detektierten Signale verarbeitet, um das Vorhandensein der Störquelle in dem zu verfolgenden Kraftfahrzeug festzustellen. Beim Vorhandensein einer Störquelle wird eine Information erzeugt, welche zumindest den Ort der detektierenden Trägereinheit und das Vorhandensein einer Störquelle in einem zu verfolgenden Kraftfahrzeug in der Umgebung der detektierenden Trägereinheit signalisiert.

Die Sensoreinheit kann also ihrerseits das Störsignal als solches detektieren. Befindet sich eine Störquelle in Form eines Spoofers in der Umgebung der Trägereinheit, wird in der Regel auch das Positionssignal der Positionsermittlungseinheit der Trägereinheit gestört. Es ist damit möglich, dass die Verarbeitungseinheit einen Spoofer dadurch erkennt, dass unplausible Positionsdaten von der eigenen Positionsermittlungseinheit geliefert werden. Befindet sich eine Störquelle in Form eines Jammers in der Umgebung der Trägereinheit, führt dies in der Regel dazu, dass die Positionsermittlungseinheit der Trägereinheit gar kein Positionssignal liefert, was ebenfalls das Erkennen einer Störquelle ermöglicht.

Die Sende-/Empfangseinheit kann ein Mobilfunkmodul sein. Das Mobilfunkmodul ist ausgeführt, sich in einem Kommunikationsnetz als bestehende Kommunikationsinfrastruktur zu registrieren und Daten zu übertragen. Die Übertragung von Daten kann unidirektional oder bidirektional erfolgen.

Zumindest eine Trägereinheit ist eine bewegliche Trägereinheit. Das bedeutet, dass die Trägereinheit nicht statisch an einem festgesetzten Ort verbleibt, sondern mobil ist. Die Trägereinheit kann ein Fahrzeug sein. In anderen Worten sind die Funktionsmodule mindestens einer Trägereinheit in einem Fahrzeug integriert. In dem System können alle Trägereinheiten oder zumindest ein Großteil der Trägereinheiten mobile Trägereinheiten sein. Es ist natürlich möglich, dass einige der Trägereinheiten statische/ortsfeste Trägereinheiten sind. Dann werden in dem System Informationen von dynamischen und statischen Trägereinheiten verarbeitet, um einen Störsender in einem zu verfolgenden Fahrzeug zu detektieren und ein Bewegungsprofil zu erstellen.

Das so erstellte Bewegungsprofil kann auch genutzt werden, um eine Straßenbenutzungsgebühr zu ermitteln. Dies ist hilfreich, wenn mit Hilfe eines Störsenders versucht werden soll, Funkverkehr zwischen einem Fahrzeug und einer Erfassungseinrichtung zu stören, um das Erfassen des Fahrzeugs zu verhindern.

Die Nutzung von einem System mit mindestens einer mobilen Trägereinheit ermöglicht es, dass der von dem Sensornetzwerk abgedeckte bzw. überwachte Bereich nicht statisch und gleichbleibend, sondern vielmehr dynamisch gemäß dem Bewegungsmuster der mobilen Trägereinheit bzw. der mobilen Trägereinheiten ist. Der Abdeckungsbereich des Sensornetzwerks im Ganzen ist bevorzugt so ausgestaltet, dass eine gewünschte Region vollständig abgedeckt wird. Allerdings ist es der mobilen Trägereinheit möglich, sich innerhalb dieses Abdeckungsbereichs zu bewegen. Sind mehrere mobile Trägereinheiten vorhanden, können diese sich allesamt innerhalb des Abdeckungsbereichs bewegen. Bevorzugt sind die Funktionsmodule einer mobilen Trägereinheit in oder an einem Fahrzeug angeordnet. Wenn dieses Fahrzeug sich mitsamt seinen Funktionsmodulen bewegt, wird ein größerer Bereich überwacht und auf Störquellen untersucht. Es ist nicht nötig, dass das Fahrzeug mit den Funktionsmodulen sich die gesamte Zeit bewegt. Die Funktion des Detektierens von Störquellen kann auch ausgeführt werden, wenn das Fahrzeug für eine gewisse Zeit an einem Ort abgestellt ist. Somit kann der Abdeckungsbereich des Sensornetzwerks bei Bedarf dynamisch an sich wandelnde Bedürfnisse angepasst werden.

Im Vergleich zu einem aus ortsfesten Trägereinheiten bestehenden Sensornetzwerk kann mit einem Sensornetzwerk, welches mindestens eine mobile Trägereinheit aufweist, ein größerer Bereich sinnvoll überwacht werden. Alternativ kann mit einer niedrigeren Anzahl von mobilen Trägereinheiten ein gleichgroßer Bereich sinnvoll überwacht werden im Vergleich zu einem Sensornetzwerk, welches aus ortsfesten Trägereinheiten besteht.

Die Verarbeitungseinheit ist beispielsweise ein Prozessor oder ein Microcontroller, welcher Anweisungen ausführt, um die hierin beschriebenen Funktionen auszuführen.

Gemäß einer Ausführungsform ist die Verarbeitungseinheit ausgeführt, für einen Detektiervorgang eines Störsignals einen Zeitstempel zu erzeugen und mit dem detektierten Störsignal zu verknüpfen, bevor das Störsignal an die Sende-/Empfangseinheit geleitet wird.

Dies ermöglicht es, basierend auf den Ortsinformationen der detektierenden Trägereinheit sowie dem Zeitstempel des Störsignals ein Orts-Zeit-Diagramm für einen Störsender zu erstellen, insbesondere wenn ein und dasselbe Störsignal von mehreren Trägereinheiten einmalig oder mehrfach oder von derselben Trägereinheit mehrfach detektiert wird.

Die Verarbeitungseinheit kann ausgeführt sein, eine Charakteristik des Störsignals zu ermitteln und mit dem detektierten Störsignal zu verknüpfen, um eine Individualisierung des Störsignals zu ermöglichen.

Die Charakteristik des Störsignals kann individuelle und wiedererkennbare Eigenschaften bezeichnen. Selbst wenn zwei oder mehrere Störquellen aus nominell gleichen Bauteilen gefertigt sind, kommt es in der Praxis zu geringfügigen Abweichungen, die für eine Individualisierung der Störquellen herangezogen werden können. Diese Abweichungen sind üblicherweise die Folge von Toleranzen der verwendeten mechanischen, elektrischen oder elektronischen Bauteile der Störquelle. Um ein Störsignal zu individualisieren, kann das Spektrum in einem vorgegebenen Frequenzbereich genutzt werden. Hierbei handelt es sich dann um den Frequenzbereich, in welchem die Nutzsignale der Positionssignale der Satelliten oder der Kommunikationseinheit des zu verfolgenden Fahrzeugs übertragen werden.

Als charakteristische Parameter für ein Signal kann beispielsweise das Frequenzspektrum mit Amplitudenspektrum und/oder Phasenspektrum verwendet werden. Alternativ oder zusätzlich kann die spektrale Leistungsdichte als auf die Frequenz bezogene Leistung eines Signals herangezogen werden. Andere charakterisierende Parameter können ebenfalls herangezogen werden.

Gemäß einer weiteren Ausführungsform ist das zentrale Verarbeitungselement ausgeführt, die Charakteristik von mehreren Störsignalen, die von mehreren Trägereinheiten stammen können, miteinander zu vergleichen und die Störsignale gemäß ihrer Charakteristik zu gruppieren, um Störsignale einzelnen Störsendern zuzuordnen.

Der Begriff "Störsignal" wird vorliegend für ein einzelnes Detektionsereignis verwendet und bezieht sich auf das Signal, welches eine Sensoreinheit während eines Detektionsvorgangs erfasst. Wenn also auf mehrere Störsignale Bezug genommen wird, betrifft dies die jeweiligen Störsignale von mehreren Detektionsvorgängen. Werden also mehrere Störsignale miteinander verglichen, so bedeutet dies, dass die detektierten Signale von mehreren Detektionsvorgängen miteinander verglichen werden. Gruppieren von Störsignalen bedeutet, dass einzelne detektierte Störsignale mit gleichen oder ähnlichen Eigenschaften zumindest vorläufig miteinander verbunden werden, nämlich vor dem Hintergrund, dass gleiche Störsignale mit hoher Wahrscheinlichkeit von derselben Störquelle stammen.

Wie bereits weiter oben ausgeführt, kann ein Störsender an der Charakteristik der ausgesendeten Störsignale erkannt werden. Wenn nun bei mehreren Detektionsvorgängen ein vergleichbares Störsignal detektiert wurde, kann mit einer gewissen Wahrscheinlichkeit davon ausgegangen werden, dass diese Störsignale von derselben Störquelle stammen.

Um die Zuordnungsgenauigkeit oder Gruppierung von einzelnen Störsignalen zu erhöhen, kann eine Plausibilitätsüberprüfung erfolgen, indem der Zeitstempel der einzelnen Störsignale herangezogen wird. Hierbei wird geprüft, ob in dem zeitlichen Abstand zwischen zwei detektierten Störsignalen die Entfernung zwischen den entsprechenden Orten überhaupt zurückgelegt werden kann. Ergibt sich hier ein Konflikt, wird das entsprechende Störsignal beim Gruppieren ausgelassen.

Gemäß einer weiteren Ausführungsform ist das zentrale Verarbeitungselement ausgeführt, aus den einem einzelnen Störsender zugeordneten Störsignalen ein Bewegungsprofil dieses einzelnen Störsenders zu erzeugen.

Dieses Bewegungsprofil enthält insbesondere Informationen über Zeit, Ort und Bewegungsrichtung des Störsenders. Diese Informationen können von mehreren Sensoreinheiten bzw. Trägereinheiten stammen. Dies erleichtert eine Verfolgung der aufzufindenden mobilen Einheit.

Gemäß einer weiteren Ausführungsform ist jede Sensoreinheit ausgeführt, im Falle eines detektierten Störsignals zusätzliche Umgebungsinformationen zu erfassen, wobei die zusätzlichen Umgebungsinformationen ausgewählt sind aus der Gruppe: Bildinformationen oder elektromagnetische Emissionen oder Abstrahlcharakteristiken von Komponenten, welche mit der zu verfolgenden mobilen Einheit in Verbindung stehen.

Die Bildinformationen sind beispielsweise Standbildaufnahmen oder Bewegbildaufnahmen der Umgebung der detektierenden Trägereinheit. Diese Bildinformationen können verwendet werden, um die aufzufindende mobile Einheit zu identifizieren, beispielsweise durch Hinzunahme eines menschlichen Bedieners. Die Bildinformationen werden in dieser Ausführungsform an das zentrale Verarbeitungselement übertragen, und zwar über die Sende-/Empfangseinheit der detektierenden Trägereinheit.

Die zusätzlich oder alternativ detektierten elektromagnetischen Wellen betreffen beispielsweise aktive Systeme der aufzufindenden mobilen Einheit, z.B. Signale, die von Fahrerassistenzsystemen wie Abstandswarnsystemen emittiert werden. Auch diese Signale lassen sich typischerweise individualisieren, so dass das entsprechende Signal für das Zuordnen eines Störsignals zu einem Störsender bzw. einer zu verfolgenden mobilen Einheit hinzugezogen werden kann.

Es ist ebenso denkbar, dass akustische Informationen wie ein Motorgeräusch erfasst und in Verbindung mit dem Störsignal gebracht werden.

Gemäß einer weiteren Ausführungsform sind die Positionsermittlungseinheit der zu verfolgenden mobilen Einheit und die Positionsermittlungseinheit der Mehrzahl von Trägereinheiten ausgeführt, satellitengestützte Positionsermittlung zu betreiben.

Es handelt sich bei den Positionsermittlungseinheiten also um Funktionseinheiten, welche von Satelliten ausgesandte Signale empfangen und basierend auf diesen Signalen eine Position ermitteln bzw. eine Positionsermittlung durch die Verarbeitungseinheit ermöglichen. Es ist möglich, dass von den Trägereinheiten nur die mobilen/beweglichen Trägereinheiten eine satellitengestützte Positionsermittlungseinheit aufweisen. Ortsfesten Trägereinheiten kann die Position auf andere Weise vorgegeben werden, z.B. können die Koordinaten statisch vorgegeben sein.

Gemäß einer weiteren Ausführungsform ist die Sensoreinheit ausgeführt, zum Detektieren eines Störsignals elektromagnetische Wellen in einem vorgegebenen Frequenzbereich zu erfassen.

Der Frequenzbereich ist insbesondere so ausgewählt werden, dass mindestens die Frequenzen zum Übertragen von satellitenbasierten Navigationssignalen und/oder zum Übertragen von Daten mittels der Sende-/Empfangseinheit darin enthalten sind. Somit werden Störungen sowohl der Navigationssignale als auch der Kommunikationssignale erkannt.

Gemäß einer weiteren Ausführungsform ist die Verarbeitungseinheit ausgeführt, zum Detektieren eines Störsignals die Ausgabesignale einer Referenz-Positionsermittlungseinheit heranzuziehen.

Die Referenz-Positionsermittlungseinheit ist in dieser Ausführungsform ebenfalls Teil der detektierenden Trägereinheit. Es kann sich bei der Referenz-Positionsermittlungseinheit um die Positionsermittlungseinheit der Trägereinheit oder um eine zusätzliche dedizierte Referenz-Positionsermittlungseinheit handeln. Die Verarbeitungseinheit empfängt Positionssignale oder Positionswerte/Koordinaten von der Referenz-Positionsermittlungseinheit. Diese Positionssignale werden auf Empfangsqualität und Plausibilität geprüft. Liefert die Referenz-Positionsermittlungseinheit gar keine Positionssignale oder Positionswerte/Koordinaten, liegt möglicherweise eine Störung mittels eines Jammers vor. Liefert die Referenz-Positionsermittlungseinheit hingegen Werte, welche signifikant von den Positionswerten der Vergangenheit abweichen oder so weit davon entfernt sind, dass die Entfernung in dem entsprechenden Zeitabschnitt nicht zurückgelegt worden sein kann, kann es sich um eine Störung mittels eines Spoofers handeln.

Gemäß einer weiteren Ausführungsform ist die Sensoreinheit ausgeführt, zum Detektieren eines Störsignals Korrelationseigenschaften des Störsignals und eines Positionsermittlungssignals in Form eines Satellitensignals zu ermitteln.

Zur Ermittlung des Vorhandenseins eines Spoofers werden bevorzugt durch die detektierende Trägereinheit Korrelationseigenschaften eines von dem Spoofer ausgesendeten GNSS-Signals und des von zumindest einem Satelliten ausgesendeten GNSS-Signals ermittelt. Alternativ oder zusätzlich können zur Ermittlung des Vorhandenseins eines Spoofers durch den Verkehrswegepunkt auch Empfangsstärken des von dem Spoofer ausgesendeten GNSS-Signals und des von zumindest einem Satelliten ausgesendeten GNSS-Signals ermittelt werden.

Gemäß einer weiteren Ausführungsform ist die Sende-/Empfangseinheit ausgeführt, Daten über ein Mobilfunknetz oder ein Satellitenkommunikationsnetz zu übertragen.

Ähnlich wie die Sende-/Empfangseinheit überträgt auch die Sende-/Empfangseinheit der detektierenden Trägereinheiten die geforderten Daten über ein Funknetz, beispielsweise ein Mobilfunknetz oder Satellitennetz.

Gemäß einer weiteren Ausführungsform ist das zentrale Verarbeitungselement ausgeführt, Informationen von mehreren Trägereinheiten betreffend dasselbe Störsignal zu identifizieren, um die Genauigkeit der Positionsermittlung der zu verfolgenden mobilen Einheit zu erhöhen.

Diese Ausführungsform ist vorteilhaft, wenn dasselbe Störsignal zur gleichen Zeit von mehreren Trägereinheiten detektiert wird. Um die Position eines Störsenders mit einer höheren Genauigkeit zu ermitteln, können Mechanismen der Triangulation verwendet werden. Hierfür wird üblicherweise ausgehend von einer Sensoreinheit die Richtung zu einem Störsender ermittelt. Dies liefert einen Richtungsvektor. Liegen mindestens zwei solcher Richtungsvektoren von gesonderten Sensoreinheiten (also von Sensoreinheiten an unterschiedlichen Orten) vor, kann die Position des Störsenders als Schnittpunkt der zwei Richtungsvektoren bestimmt werden. Dieser Ansatz ist auch mit mehr als zwei Richtungsvektoren möglich.

Gemäß einer weiteren Ausführungsform ist das System ausgeführt, dass im Falle eines detektierten Störsignals Informationen über den Ort des Störsignals an andere Fahrzeuge weitergeleitet werden, um auf mögliche Störungen der Positionsermittlungseinheiten hinzuweisen.

Die Störquelle stört die entsprechenden Signale (Navigationssignale, Kommunikationssignale) in einem bestimmten Umkreis in Abhängigkeit der Leistung des Störsignals. Dieses Störsignal kann entsprechend auch andere Systeme als diejenigen in der zu verfolgenden mobilen Einheit stören. Die hier beschriebene Ausführungsform ermöglicht es, dass ein Warnsignal an Fahrzeuge übermittelt wird, welche sich auf dem Bewegungspfad der zu verfolgenden mobilen Einheit befinden. So ist es beispielsweise möglich, dass auf Straßen mit vorgegebener Fahrtrichtung oder allgemein bis zum nächsten Abzweig von der aktuell befahrenen Straße ein Bewegungspfad der zu verfolgenden mobilen Einheit abgeschätzt wird. Das Warnsignal ermöglicht es, dass Fahrzeuge auf dem abgeschätzten zukünftigen Bewegungspfad über die sich nähernde Störquelle informiert werden. Dies ist insbesondere für Anwendungen des autonomen Fahrens von Vorteil, weil aufkommende Störungsquellen für Navigationssignale und/oder Kommunikationssignale frühzeitig bekannt sind.

In einer beweglichen Einheit, die im Zusammenhang mit dem System beschrieben wurde, kann eine Störsenderidentifiziereinheit eingebaut sein. Die Störsenderidentifiziereinheit weist eine Sensoreinheit, eine Verarbeitungseinheit, eine erste Schnittstelle und eine zweite Schnittstelle auf. Die Sensoreinheit und die Versorgungseinheit sind so ausgestaltet und führen die Funktion aus, wie mit Bezug zu dem System beschrieben.

Die Störsenderidentifiziereinheit weist eine erste Schnittstelle zum Anschließen einer Positionsermittlungseinheit auf. Beispielsweise wird über diese erste Schnittstelle eine Positionsermittlungseinheit des Fahrzeugs, in welches die Störsenderidentifiziereinheit eingebaut wird, angeschlossen. An die erste Schnittstelle kann alternativ oder zusätzlich auch eine dedizierte Positionsermittlungseinheit angeschlossen werden, wenn beispielsweise das mit der Störsenderidentifiziereinheit ausgerüstete Fahrzeug über keine integrierte Positionsermittlungseinheit verfügt oder keine benötigte Verbindungsschnittstelle vorliegt.

Daneben weist die Störsenderidentifiziereinheit weiter eine zweite Schnittstelle zum Anschließen einer Sende-/Empfangseinheit auf. Bei der Sende-/Empfangseinheit kann es sich um ein Modul des mit der Störsenderidentifiziereinheit ausgerüsteten Fahrzeugs handeln. Manche Fahrzeuge verfügen bereits über solche Sende-/Empfangseinheiten, um beliebig geartete mobile Datendienste zu nutzen. Die bestehenden Sende-/Empfangseinheiten können genutzt werden, um die von der Verarbeitungseinheit gelieferten Daten an den vorgesehenen Empfänger zu übertragen.

Nachdem die Positionsermittlungseinheit und die Sende-/Empfangseinheit über eine Schnittstelle mit der Störsenderidentifiziereinheit verbunden werden, bietet dies ein hohes Maß an Flexibilität für Nachrüstung und Austausch.

Die erste Schnittstelle und die zweite Schnittstelle können physisch und mechanisch in einer einzelnen Stecker-Buchse-Verbindung realisiert sein. Es können aber auch getrennte Verbindungen vorgesehen und verwendet werden. Die erste und die zweite Schnittstelle können leitungsgebundene oder drahtlose Schnittstellen sein. Es ist denkbar, dass auch die Sensoreinheit reversibel mit der Verarbeitungseinheit gekoppelt ist, so dass auch die Sensoreinheit bei Bedarf ausgetauscht werden kann, beispielsweise wenn Sensoreinheiten mit geändertem Funktions- und Leistungsumfang genutzt werden sollen.

Die Verarbeitungseinheit ist mit der Sensoreinheit, der ersten Schnittstelle und der zweiten Schnittstelle funktional gekoppelt. Die Sensoreinheit ist ausgeführt, ein von einer Störquelle abgegebenes Störsignal, welches geeignet ist, eine Funktionsweise einer Positionsermittlungseinheit einer zu verfolgenden mobilen Einheit zu stören, zu detektieren und an die Verarbeitungseinheit weiterzuleiten. Die Verarbeitungseinheit ist ausgeführt, im Falle, dass die Sensoreinheit ein Störsignal detektiert, eine Position der Störsenderidentifiziereinheit über die erste Schnittstelle zu erhalten (beispielsweise indem die Position von der Positionsermittlungseinheit abgefragt wird oder indem eine wiederholt von der Positionsermittlungseinheit gelieferte Position herangezogen wird) und Informationen über das abgegebene Störsignal und/oder die Position der Störsenderidentifiziereinheit an die zweite Schnittstelle zu leiten.

Die Störsenderidentifiziereinheit kann genutzt werden, um ein Fahrzeug damit nachzurüsten. Sodann kann dieses Fahrzeug als mobile Trägereinheit fungieren und dazu beitragen, ein dynamisches Sensornetzwerk zum Detektieren und Verfolgen von Störsendern aufzubauen.

Es wird weiterhin ein Fahrzeug beschrieben, welches in einem erfindungsgemäßen System zum Einsatz kommen kann. Das Fahrzeug weist eine Positionsermittlungseinheit, eine Sende-/Empfangseinheit und eine Störsenderidentifiziereinheit auf. Die Positionsermittlungseinheit ist ausgeführt, eine Position des Fahrzeugs zu ermitteln, wie weiter oben beschrieben. Die Sende-/Empfangseinheit ist ausgeführt, Daten über eine leitungslose Verbindung an eine Gegenstelle zu übertragen. Das Fahrzeug weist eine Störsenderidentifiziereinheit wie weiter oben beschrieben auf. Die erste Schnittstelle ist mit der Positionsermittlungseinheit verbunden und die zweite Schnittstelle ist mit der Sende-/Empfangseinheit verbunden.

Somit ist die Störsenderidentifiziereinheit in das Fahrzeug funktional integriert und wirkt mit einigen der Komponenten des Fahrzeugs zusammen, mindestens mit der Positionsermittlungseinheit und der Sende-/Empfangseinheit. Enthält das Fahrzeug die genannten Komponenten (Positionsermittlungseinheit und Sende-/Empfangseinheit) nicht, können diese gesondert bereitgestellt und mit der Störsenderidentifiziereinheit gekoppelt werden.

### KURZE BESCHREIBUNG DER FIGUREN

Im Folgenden werden mit Verweis auf die Figuren Ausführungsbeispiele der Erfindung beschrieben. Darin zeigen:
- Fig. 1: eine schematische Darstellung eines Systems gemäß einem Ausführungsbeispiel.
- Fig. 2: eine schematische Darstellung einer Störsenderidentifiziereinheit.
- Fig. 3: eine schematische Darstellung eines Fahrzeugs.

### DETAILLIERTE BESCHREIBUNG VON AUSFÜHRUNGSBEISPIELEN

Die Darstellungen in den Figuren sind schematisch und nicht maßstabsgetreu. Werden in der folgenden Figurenbeschreibung gleiche Bezugsziffern verwendet, so betreffen diese gleiche oder ähnliche Elemente.

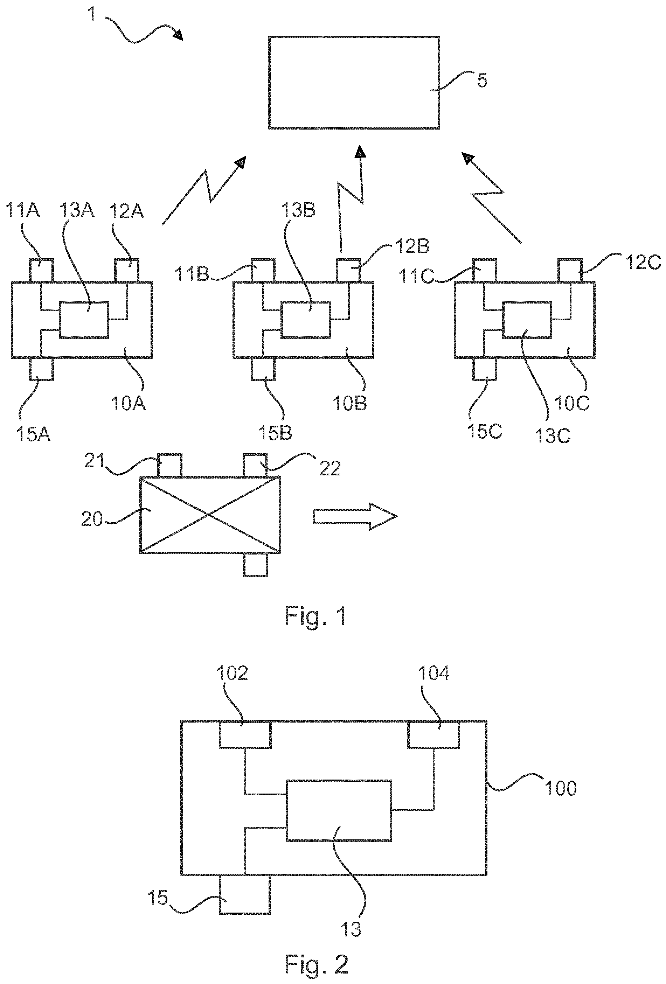

Fig. 1 zeigt eine schematische Darstellung eines Systems 1 zum Ermitteln der Position einer zu verfolgenden mobilen Einheit 20. Das System 1 enthält ein Sensornetzwerk, welches von Sensoreinheiten 15 aufgespannt wird. Die Sensoreinheiten 15 sind in Trägereinheiten 10 angeordnet. Weiterhin weisen die Trägereinheiten 15 jeweils eine Positionsermittlungseinheit 11, eine Sende-/Empfangseinheit 12 und eine Verarbeitungseinheit 13 auf. Das System 1 weist weiterhin ein zentrales Verarbeitungselement 5 auf.

In Fig. 1 sind drei Trägereinheiten 10A, 10B, 10C gezeigt. Diese drei Trägereinheiten sind bezüglich der genannten Komponenten funktional einander entsprechend aufgebaut. Die einzelnen Komponenten sind mit den Buchstaben A, B, C gekennzeichnet. Die einzelnen Trägereinheiten 10 können ortsfest oder beweglich/mobil ausgestaltet sein. Jedenfalls ist in dem gesamten System 1 mindestens eine bewegliche Einheit 10 enthalten. Beispielsweise können die funktionalen Komponenten in einem Fahrzeug eingebaut sein, so dass der Ort dieser beweglichen Trägereinheit sich im Laufe der Zeit verändern kann.

Die Trägereinheiten 10 sind funktional vorbereitet, eine Störquelle in einer zu verfolgenden mobilen Einheit 20 zu detektieren und Informationen hierüber zu erfassen und an ein zentrales Verarbeitungselement 5 zu übertragen. Hierfür werden die Sende-/Empfangseinheiten 12 genutzt, welche die Informationen über eine leitungslose Verbindung übertragen.

In dem Fahrzeug 20 ist eine Positionsermittlungseinheit 21 (GNSS-Empfänger) angeordnet. Der GNSS-Empfänger 21 empfängt GNSS-Signale von Satelliten. Aus diesen GNSS-Signalen ermittelt der GNSS-Empfänger 21 seine Position und damit die Position des Fahrzeugs 20. Die Position des Fahrzeugs 20 kann wahlweise innerhalb des Fahrzeugs 20 oder von einer zentralen Instanz außerhalb des Fahrzeugs verarbeitet werden. Die in Fig. 1 dargestellte zentrale Instanz 5 empfängt hierzu die Positionsdaten des Fahrzeugs 20 in regelmäßigen oder unregelmäßigen Abständen, bspw. über eine kontaktlose Kommunikationsschnittstelle 22.

Die Funktionsfähigkeit des GNSS-Empfängers 21 kann durch eine in das Fahrzeug 20 dauerhaft oder temporär eingebrachte Störquelle beeinträchtigt werden. Als Störquellen kommen Störsender, sog. Jammer, oder Spoofer in Betracht. Durch den Störsender bzw. Jammer kann die Erfassung und das Nachführen der von den Satelliten ausgesendeten GNSS-Signale unterbunden werden. Hierdurch kann durch den GNSS-Empfänger 21 keine Positionsbestimmung mehr vorgenommen werden.

Ein Spoofer sendet ein durch den GNSS-Empfänger 21 detektierbares Signal aus, welches durch den GNSS-Empfänger 21 als GNSS-Signal eines Satelliten interpretiert wird. Da das von dem Spoofer ausgesendete Signal ähnliche Korrelationseigenschaften aufweist wie das von einem Satelliten empfangene GNSS-Signal, verwendet der GNSS-Empfänger 21 unter Umständen dieses zur Positionsbestimmung. Aufgrund dieses manipulierten Signals kann der GNSS-Empfänger hieraus jedoch keine korrekte Position ermitteln.

Die Sensoreinheit 15 in der Trägereinheit 10 umfasst einen oder mehrere Sensoren zur Detektion einer in dem Fahrzeug 20 installierten Störquelle. Die Sensoreinheit 15 umfasst beispielsweise entsprechende Antennen, um eine elektromagnetische Welle zu erfassen.

Jammer in einem Kraftfahrzeug können dadurch erkannt werden, dass durch die Sensoreinheit 15 der Trägereinheit ein Spektrum-Monitoring-Verfahren durchgeführt wird. Alternativ oder zusätzlich kann zur Detektion eines Jammers durch die Trägereinheit 10 die Performanz eines Referenz-GNSS-Empfängers und seiner Parameter in Bezug auf Erfassung und Nachführung eines GNSS-Signals ermittelt werden.

Zur Detektion eines Spoofers werden durch die Trägereinheit 10 Korrelationseigenschaften eines von dem Spoofer ausgesendeten GNSS-Signals und des von zumindest einem Satelliten ausgesendeten GNSS-Signals ermittelt. Alternativ oder zusätzlich können die Empfangsstärken des von dem Spoofer ausgesendeten GNSS-Signals und des von zumindest einem der Satelliten ausgesendeten GNSS-Signals ermittelt werden.

Bewegt sich nun die zu verfolgende mobile Einheit 20 mit der Störquelle an Bord an den Trägereinheiten 10 mit den Sensoreinheiten 15 vorbei, detektieren die Sensoreinheiten die Störquelle. Sodann wird eine Meldung über dieses Detektionsergebnis an das zentrale Verarbeitungselement 5 übertragen. In dieser Meldung sind mindestens Information über das Störsignal und die Position der detektierenden Trägereinheit 10 enthalten. Diese Position erhält die Verarbeitungseinheit 13 der detektierenden Trägereinheit 10 von der Positionsermittlungseinheit 11 in der detektierenden Trägereinheit. Somit wird die Position der Störquelle mittelbar ermittelt.

Das System 1 kann beispielsweise verwendet werden, um gegen den Willen der berechtigten Person entwendete Fahrzeuge (die zu verfolgende mobile Einheit 20) zu verfolgen und aufzuspüren. Wird beispielsweise ein Fahrzeug 20 gestohlen und die Signale für die Positionsermittlungseinheit 21 sowie die von der Sende-/Empfangseinheit 22 ausgesandten Signale mittels einer Störquelle gestört/überlagert/gefälscht, so können die Trägereinheiten 10 die Signale der Störquelle detektieren und somit ein Bewegungsprofil des zu verfolgenden Fahrzeugs 20 erstellen.

Das System 1 erlaubt die Detektion und ggf. Verfolgung und einfachere Auffindung von Gegenständen wie z.B. gestohlenen Autos, auch wenn diese Gegenstände durch Störsender an einer eigenen Ortung und Weitergabe ihrer georäumlichen Position behindert sind.

Das System 1 setzt sich in diesem Ausführungsbeispiel aus folgenden Komponenten zusammen: eine oder mehrere Störsenderdetektionseinheiten (Sensoreinheiten 15), Übertragungseinheiten (Sende-/Empfangseinheiten 12), GNSS Empfänger (Positionsermittlungseinheiten 11), eine zentrale Auswerteeinheit (zentrales Verarbeitungselement 5), eine Kommunikationsinfrastruktur, welche den Austausch von Daten zwischen den Übertragungseinheiten und der zentralen Auswerteeinheit ermöglicht, beispielsweise ein mobiles Kommunikationsnetz.

Das Sensornetzwerk besteht aus Störsignaldetektoren (Sensoreinheiten 15), wovon mindestens einer in einem Fahrzeug integriert ist, wobei dieses Fahrzeug sich in Bewegung oder in Ruhe befinden kann. Mit diesen Störsignaldetektoren sind Mobilfunk-Kommunikationseinheiten (Sende-/Empfangseinheiten 12) verbunden und ebenfalls in den Fahrzeugen verbaut. Die Störsignaldetektoren sind so eingestellt, dass sie zumindest zeitweise oder dauerhaft das Frequenzspektrum der gängigen GNSS-(z.B. GPS L1 Band 1565 - 1585MHz) - und Mobilfunkfrequenzen (z.B. GSM850, GSM900, GSM1800) detektieren. Störsender sind beispielsweise daran zu erkennen, dass sie das gültige Signal mit einer höheren Leistung überlagern. Mithilfe einer Signalstärkemessung und ggf. einer zusätzlichen Analyse der Signalcharakteristik kann ein Störsender detektiert und nachfolgend identifiziert werden.

Bewegt sich nun ein gestohlenes Fahrzeug 20, dessen GNSS basierte Ortungsfähigkeit sowie ggf. auch Kommunikationsfähigkeit durch einen Störsender eingeschränkt oder verhindert ist, an einem der mit einem Störsignaldetektoren ausgestatteten Trägereinheiten vorbei, wird in dieser Trägereinheit ein Detektionsereignis ausgelöst. Das Detektionsereignis beinhaltet beispielsweise die folgenden Parameter: Zeitpunkt der Detektion; Frequenzbänder des Störsignals; Pegelverlauf des Störsignals; Charakteristik des Störsignals (z.B. zeitlicher Verlauf der Signalstärken in Abhängigkeit von der Frequenz); Fingerprint des Störsignals; Position der detektierenden Trägereinheit zum Zeitpunkt der Detektion.

Dieses Detektionsereignis löst wiederum die Erstellung einer die o.g. Parameter beinhaltenden Nachricht aus, welche dann über die Kommunikationsinfrastruktur automatisch an die Auswerteeinheit gesendet wird. Ist ein Verbindungsaufbau nicht möglich, wird die Nachricht zu einem späteren Zeitpunkt gesendet.

In der Auswerteeinheit wird diese Nachricht zunächst in einer Datenbank gespeichert und steht dort über ein Abfragesystem Nutzern des Systems zur weiteren Analyse zur Verfügung.

In der Auswerteeinheit können die einkommenden Nachrichten zunächst automatisch nach Ort und Zeit indiziert werden. Auch können die verschiedenen Nachrichten individuellen, gestohlenen Fahrzeugen zugeordnet werden, mit dem Ziel, eine Verfolgung des individuellen Fahrzeugs zu ermöglichen. Dazu werden die Nachrichten nach Gemeinsamkeiten bzgl. der bei der Detektion aufgenommenen Paramater untersucht, insbesondere hinsichtlich Signalpegel und Zeitverlauf der einzelnen aufgenommenen Frequenzen (Fingerprint des Störsignals). Anhand des Signalverlaufs eines Störsenders (Fingerprint) kann ein Detektionsereignis mit anderen Detektionsereignissen verknüpft werden, um das Störsignal zu individualisieren. Sodann steht das individualisierte Störsignal für eine Verfolgung eines Fahrzeugs zur Verfügung. Auch Störsender des gleichen Typs und aus derselben Baureihe weisen geringfügig unterschiedliche Fingerprints auf, z.B. als Ergebnis der verbauten elektronischen Komponenten, und ermöglichen dadurch das Tracking eines einzelnen Störsenders.

Von einem detektierten Störsignal können Spektrum (Power zu Frequenz), Spektrogramm (Frequenz zu Zeit mit integrierter Power pro Frequenz) und Periodizität ermittelt werden. Die zu Grunde liegenden Daten werden dann für die Erstellung des Fingerprints ausgewertet (z.B. Pulsstärke, die Pulsfrequenz, das Frequenzband des Signales), um über die Eindeutigkeit des charakteristischen Signals eine Zuordnung zu einem bestimmten Störsender zu erreichen. Eingehende Nachrichten über Detektionsereignisse mit einer hohen Gemeinsamkeit in den Parameterwerten werden miteinander verbunden. Diese zusammenhängenden Nachrichten können dann einer eindeutigen Identifikationsnummer zugeordnet und die einzelnen Punkte nach Detektionszeitpunkt in einer Liste sortiert werden. Daran können sich weitere Plausibilitätskontrollen anschließen. Unter anderem können die Detektionsereignisse anhand von digitalen Straßennetzwerkdaten und entsprechenden Routingfunktionalitäten dahingehend überprüft wird, ob die Strecke zwischen zwei oder mehreren Detektionspunkten auf dem Straßennetzwerk von dem Fahrzeug zurückgelegt werden können, wobei auch durchschnittliche Geschwindigkeiten auf der entsprechenden Strecke zu einer bestimmte Jahres- bzw. Tageszeit berücksichtigt werden. Dazu werden kommerziell verfügbare Verkehrsfrequenzdaten herangezogen. Ergibt sich aus dieser Abschätzung, dass einer oder mehrere Detektionspunkte eines vermeintlich identischen Fahrzeugs nicht plausibel sind, werden diese aus der Liste entfernt.

In einer weiteren Ausführung ist es denkbar, zusätzlich zu den bisherigen Sensoren auch noch solche zu verwenden, die eine Zuordnung des detektierten Störsenders zu einem bestimmten Fahrzeug erlaubt - insbesondere eine Kamera, die während der Detektion ein Foto von dem Fahrzeug bzw. des Fahrzeugkennzeichens aufnimmt, um später eine einfachere Identifikation des Fahrzeugs z.B. durch Behörden oder andere Sensornetzwerke zu erlauben. Dies bietet sich insbesondere für eine stationäre Teilmenge des Sensornetzwerks an.

Nicht zuletzt ließe sich über eine automatische Klassifizierung des Fahrzeugtyps (PKW, LKW, Baumaschinen) auch noch auf ein Geschwindigkeitsprofil des Fahrzeugs schließen und sich diese Information wiederum vorteilhaft für die oben beschriebene Plausibilitätsprüfung nutzen. Um das Auffinden von gestohlenen Fahrzeugen zu vereinfachen, ist es auch denkbar, anhand einer Extrapolation des bisherigen Geschwindigkeitsprofils des Fahrzeugs in die Zukunft den zukünftigen Aufenthaltsort räumlich einzugrenzen.

Fig. 2 zeigt eine schematische Darstellung einer Störsenderidentifiziereinheit 100 aufweisend eine Sensoreinheit 15 und eine mit der Sensoreinheit gekoppelte Verarbeitungseinheit 13. Die Verarbeitungseinheit 13 ist daneben mit der ersten Schnittstelle 102 und der zweiten Schnittstelle 104 gekoppelt. Die beiden Schnittstellen 102, 104 sind vorgesehen, um mit einer Positionsermittlungseinheit und einer Sende-/Empfangseinheit gekoppelt zu werden.

Somit erfüllt die Störsenderidentifiziereinheit 100 die Funktion wie mit Bezug zu Fig. 1 beschrieben. Allerdings sind Positionsermittlungseinheit und Sende-/Empfangseinheit Komponenten, welche reversibel mit der Störsenderidentifiziereinheit verbunden werden. Die Positionsermittlungseinheit und Sende-/Empfangseinheit können beispielsweise Bestandteile eines Fahrzeugs sein. In dem Fall ist die Störsenderidentifiziereinheit mit Bestandteilen des Fahrzeugs gekoppelt. Es kann hierfür eine Schnittstelle in dem Fahrzeug vorgesehen sein, um die entsprechende Verbindung herzustellen.

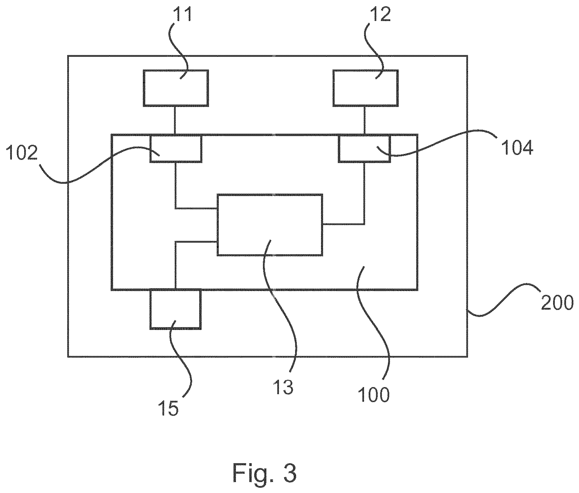

Fig. 3 zeigt eine schematische Darstellung eines Fahrzeugs 200 mit einer Störsenderidentifiziereinheit 100. Das Fahrzeug 200 entspricht der Trägereinheit 10. Die Störsenderidentifiziereinheit 100 ist mit der Positionsermittlungseinheit 11 und der Sende-/Empfangseinheit 12, welche Bestandteile des Fahrzeugs 200 sind, gekoppelt, um die hierin beschriebene Funktion auszuführen.

### BEZUGSZEICHENLISTE

- 1: System
- 5: zentrales Verarbeitungselement
- 10: Trägereinheit
- 11: Positionsermittlungseinheit
- 12: Sende-/Empfangseinheit
- 13: Verarbeitungseinheit
- 15: Sensoreinheit
- 20: zu verfolgende mobile Einheit
- 21: Positionsermittlungseinheit
- 22: Sende-/Empfangseinheit

- 100: Störsenderidentifiziereinheit
- 102: erste Schnittstelle
- 104: zweite Schnittstelle
- 200: Fahrzeug

## Patentansprüche

1. System (1) zum Ermitteln der Position einer zu verfolgenden mobilen Einheit (20), in welcher eine Störquelle ist, das System (1) aufweisend ein zentrales Verarbeitungselement (5); und
eine Mehrzahl von Trägereinheiten (10A, 10B, 10C), wobei jede Trägereinheit eine Sensoreinheit (15A, 15B, 15C), eine Positionsermittlungseinheit (11A, 11B, 11C), eine Sende-/Empfangseinheit (12A, 12B, 12C) und eine Verarbeitungseinheit (13A, 13B, 13C) aufweist, wobei die Verarbeitungseinheit mit der Sensoreinheit, der Positionsermittlungseinheit und der Sende-/Empfangseinheit funktional gekoppelt ist;
wobei die Sensoreinheit (15A, 15B, 15C) ausgeführt ist, ein von der Störquelle abgegebenes Störsignal, welches geeignet ist, eine Funktionsweise einer Positionsermittlungseinheit (21) und/oder Sende-/Empfangseinheit (22) der zu verfolgenden mobilen Einheit (20) zu stören, zu detektieren und an die Verarbeitungseinheit weiterzuleiten;
wobei die Verarbeitungseinheit (13A, 13B, 13C) ausgeführt ist, im Falle, dass die Sensoreinheit ein Störsignal detektiert, eine Position der Trägereinheit (10A, 10B, 10C) von der Positionsermittlungseinheit (11A, 11B, 11C) der Trägereinheit zu erhalten und Informationen über das detektierte Störsignal und die Position der Trägereinheit an die Sende-/Empfangseinheit zu leiten;
wobei die Sende-/Empfangseinheit (12A, 12B, 12C) ausgeführt ist, die erhaltenen Informationen an das zentrale Verarbeitungselement (5) zu übertragen;
wobei zumindest eine der Mehrzahl von Trägereinheiten (10A, 10B, 10C) eine bewegliche Trägereinheit ist;
wobei jede der Mehrzahl von Trägereinheiten (10A, 10B, 10C) ausgestaltet ist, wenn sich die zu verfolgende mobile Einheit (20), deren auf einem Globalen Navigationssatelliten System basierte Ortungsfähigkeit durch die Störquelle eingeschränkt oder verhindert ist, an dieser Trägereinheit vorbeibewegt, ein Detektionsereignis auszulösen,
**dadurch gekennzeichnet, dass**
das Detektionsereignis die folgenden Parameter beinhaltet: Zeitpunkt der Detektion, Frequenzbänder des Störsignals, Pegelverlauf des Störsignals, Charakteristik des Störsignals als zeitlicher Verlauf der Signalstärke in Abhängigkeit von der Frequenz, Fingerprint enthaltend einen Signalpegel und Zeitverlauf der einzelnen aufgenommenen Frequenzen des Störsignals, Position der detektierenden Trägereinheit zum Zeitpunkt der Detektion, und durch das Detektionsereignis die Erstellung einer die genannten Parameter beinhaltenden Nachricht auszulösen, welche über eine Kommunikationsinfrastruktur automatisch an das zentrale Verarbeitungselement (5) gesendet wird,
wobei das zentrale Verarbeitungselement (5) ausgestaltet ist, die Nachricht in einer Datenbank zu speichern und einkommende Nachrichter über Detektionsereignisse automatisch nach Ort und Zeit zu indizieren und auf Gemeinsamkeiten bezüglich der bei der Detektion aufgenommenen Parameter zu untersuchen, um eine Individualisierung des Störsignals zu ermöglichen, indem ein Detektionsereignis anhand des Fingerprints des Störsignals mit anderen Detektionsereignissen verknüpft wird, um das Störsignal zu individualisieren,
wobei das zentrale Verarbeitungselement (5) ferner ausgestaltet ist, anhand des individualisierten Störsignals die Position der zu verfolgenden mobilen Einheit (20) zu ermitteln, indem von der Position der detektierenden Trägereinheit auf die Position der Störquelle geschlossen wird.

2. System (1) nach Anspruch 1,
wobei die Verarbeitungseinheit (13A, 13B, 13C) ausgeführt ist, für einen Detektiervorgang eines Störsignals einen Zeitstempel zu erzeugen und mit dem detektierten Störsignal zu verknüpfen, bevor das Störsignal an die Sende-/Empfangseinheit geleitet wird.

3. System (1) nach einem der voranstehenden Ansprüche,
wobei das zentrale Verarbeitungselement (5) ausgeführt ist, die Charakteristik von mehreren Störsignalen miteinander zu vergleichen und die Störsignale gemäß ihrer Charakteristik zu gruppieren, um Störsignale einzelnen Störsendern zuzuordnen.

4. System (1) nach Anspruch 3,
wobei das zentrale Verarbeitungselement (5) ausgeführt ist, aus den einem einzelnen Störsender zugeordneten Störsignalen ein Bewegungsprofil dieses einzelnen Störsenders zu erzeugen.

5. System (1) nach einem der voranstehenden Ansprüche,
wobei die Sensoreinheit (15A, 15B, 15C) ausgeführt ist, im Falle eines detektierten Störsignals zusätzliche Umgebungsinformationen zu erfassen;
wobei die zusätzlichen Umgebungsinformationen ausgewählt sind aus der Gruppe: Bildinformationen oder elektromagnetische Emissionen oder Abstrahlcharakteristiken von Komponenten, welche mit der zu verfolgenden mobilen Einheit in Verbindung stehen.

6. System (1) nach einem der voranstehenden Ansprüche,
wobei die Positionsermittlungseinheit (21) der zu verfolgenden mobilen Einheit (20) und die Positionsermittlungseinheit (11A, 11B, 11C) zumindest einer der Mehrzahl von Trägereinheiten (10A, 10B, 10C) ausgeführt sind, satellitengestützte Positionsermittlung zu betreiben.

7. System (1) nach einem der voranstehenden Ansprüche,
wobei die Sensoreinheit (12A, 12B, 12C) ausgeführt ist, zum Detektieren eines Störsignals elektromagnetische Wellen in einem vorgegebenen Frequenzbereich zu erfassen.

8. System (1) nach einem der voranstehenden Ansprüche,
wobei die Verarbeitungseinheit ausgeführt ist, zum Detektieren eines Störsignals die Ausgabesignale einer Referenz-Positionsermittlungseinheit heranzuziehen.

9. System (1) nach einem der voranstehenden Ansprüche,
wobei die Sensoreinheit (15A, 15B, 15C) ausgeführt ist, zum Detektieren eines Störsignals Korrelationseigenschaften des Störsignals und eines Positionsermittlungssignals in Form eines Satellitensignals zu ermitteln.

10. System (1) nach einem der voranstehenden Ansprüche,
wobei die Sende-/Empfangseinheit (12A, 12B, 12C) ausgeführt ist, Daten über ein Mobilfunknetz oder ein Satellitenkommunikationsnetz zu übertragen.

11. System (1) nach einem der voranstehenden Ansprüche,
wobei das zentrale Verarbeitungselement (5) ausgeführt ist, Informationen von mehreren Trägereinheiten betreffend dasselbe Störsignal zu identifizieren, um die Genauigkeit der Positionsermittlung der zu verfolgenden mobilen Einheit zu erhöhen.

12. System (1) nach einem der voranstehenden Ansprüche,
wobei das System ausgeführt ist, dass im Falle eines detektierten Störsignals Informationen über den Ort des Störsignals an andere Fahrzeuge weitergeleitet werden, um auf mögliche Störungen der Positionsermittlungseinheiten hinzuweisen.

## Claims

1. System (1) for determining the position of a mobile unit (20) to be tracked, in which an interference source is located, the system (1) comprising:
a central processing element (5); and
a plurality of carrier units (10A, 10B, 10C), each carrier unit comprising a sensor unit (15A, 15B, 15C), a position determination unit (11A, 11B, 11C), a transmitting/receiving unit (12A, 12B, 12C), and a processing unit (13A, 13B, 13C), wherein the processing unit is functionally coupled to the sensor unit, the position determination unit, and the transmitting/receiving unit;
wherein the sensor unit (15A, 15B, 15C) is designed to detect an interference signal emitted by the interference source, which is capable of interfering with the operation of a position determination unit (21) and/or transmitting/receiving unit (22) of the mobile unit (20) to be tracked, and to forward it to the processing unit;
wherein the processing unit (13A, 13B, 13C) is designed, in the event that the sensor unit detects an interference signal, to obtain a position of the carrier unit (10A, 10B, 10C) from the position determination unit (11A, 11B, 11C) of the carrier unit and to forward information about the detected interference signal and the position of the carrier unit to the transmitting/receiving unit;
wherein the transmitting/receiving unit (12A, 12B, 12C) is configured to transmit the obtained information to the central processing element (5);
wherein at least one of the plurality of carrier units (10A, 10B, 10C) is a movable carrier unit;
wherein each of the plurality of carrier units (10A, 10B, 10C) is configured to trigger a detection event when the mobile unit (20) to be tracked, whose positioning capability based on a global navigation satellite system is restricted or prevented by the interference source, moves past that carrier unit,
**characterized in that**
the detection event includes the following parameters: time of detection, frequency bands of the interference signal, level curve of the interference signal, characteristics of the interference signal as a time curve of the signal strength as a function of frequency, fingerprint containing a signal level and time curve of the individual recorded frequencies of the interference signal, position of the detecting carrier unit at the time of detection, and triggering the creation of a message containing the aforementioned parameters by the detection event, which is automatically sent to the central processing element (5) via a communication infrastructure,
wherein the central processing element (5) is designed storing the message about detection events in a database and automatically indexing incoming messages by location and time and examining them for similarities with regard to the parameters recorded during detection in order to enable individualization of the interference signal by linking a detection event to other detection events on the basis of the fingerprint of the interference signal in order to individualize the interference signal, wherein the central processing element (5) is further configured to determine the position of the mobile unit (20) to be tracked on the basis of the individualized interference signal by inferring the position of the interference source from the position of the detecting carrier unit.

2. System (1) according to claim 1,
wherein the processing unit (13A, 13B, 13C) is designed to generate a time stamp for a detection process of an interference signal and to link it to the detected interference signal before the interference signal is forwarded to the transmitting/receiving unit.

3. System (1) according to one of the preceding claims,
wherein the central processing element (5) is designed to compare the characteristics of multiple interference signals with each other and to group the interference signals according to their characteristics in order to assign interference signals to individual interference transmitters.

4. System (1) according to claim 3,
wherein the central processing element (5) is designed to generate a movement profile of this individual interference transmitter from the interference signals assigned to an individual interference transmitter.

5. System (1) according to one of the preceding claims,
wherein the sensor unit (15A, 15B, 15C) is designed to capture additional environmental information in the event of a detected interference signal;
wherein the additional environmental information is selected from the group: image information or electromagnetic emissions or radiation characteristics of components associated with the mobile unit to be tracked.

6. System (1) according to one of the preceding claims,
wherein the position determination unit (21) of the mobile unit (20) to be tracked and the position determination unit (11A, 11B, 11C) of at least one of the plurality of carrier units (10A, 10B, 10C) are designed to perform satellite-based position determination.

7. System (1) according to any of the preceding claims,
wherein the sensor unit (12A, 12B, 12C) is designed to detect an interference signal by detecting electromagnetic waves in a predetermined frequency range.

8. System (1) according to one of the preceding claims,
wherein the processing unit is designed to use the output signals of a reference position determination unit to detect an interference signal.

9. System (1) according to one of the preceding claims,
wherein the sensor unit (15A, 15B, 15C) is designed to detect a disturbance signal, to determine correlation properties of the disturbance signal and a position determination signal in the form of a satellite signal.

10. System (1) according to one of the preceding claims,
wherein the transmitting/receiving unit (12A, 12B, 12C) is designed to transmit data via a mobile radio network or a satellite communication network.

11. System (1) according to one of the preceding claims,
wherein the central processing element (5) is configured to identify information from a plurality of carrier units relating to the same interference signal in order to increase the accuracy of the position determination of the mobile unit to be tracked.

12. System (1) according to any of the preceding claims,
wherein the system is designed such that, in the event of a detected interference signal, information about the location of the interference signal is forwarded to other vehicles in order to indicate possible interference with the position determination units.

## Revendications

1. Système (1) pour déterminer la position d'une unité mobile (20) à suivre, dans laquelle est disposée une source de perturbation, le système (1) comprenant:
un élément de traitement central (5); et
une pluralité d'unités de support (10A, 10B, 10C), dans lequel chaque unité de support comportant une unité de détection (15A, 15B, 15C), une unité de détermination de position (11A, 11B, 11C), une unité d'émission/réception (12A, 12B, 12C) et une unité de traitement (13A, 13B, 13C), dans lequel l'unité de traitement étant couplée de manière fonctionnelle à l'unité de détection, à l'unité de détermination de position et à l'unité d'émission/réception;
dans lequel l'unité de détection (15A, 15B, 15C) est conçue pour détecter un signal perturbateur émis par la source de perturbation, qui est susceptible de perturber le fonctionnement d'une unité de détermination de position (21) et/ou d'une unité d'émission/réception (22) de l'unité mobile (20) à suivre, et pour le transmettre à l'unité de traitement;
dans lequel l'unité de traitement (13A, 13B, 13C) étant conçue pour obtenir, dans le cas où l'unité de détection détecte un signal perturbateur, une position de l'unité de support (10A, 10B, 10C) à partir de l'unité de détermination de position (11A, 11B, 11C) de l'unité de support et de transmettre des informations sur le signal perturbateur détecté et la position de l'unité de support à l'unité d'émission/réception;
dans lequel l'unité d'émission/réception (12A, 12B, 12C) étant conçue pour transmettre les informations obtenues à l'élément de traitement central (5);
dans lequel au moins une des multiples unités de support (10A, 10B, 10C) étant une unité de support mobile;
dans lequel chacune des multiples unités de support (10A, 10B, 10C) étant conçue pour déclencher un événement de détection lorsque l'unité mobile à suivre (20), dont la capacité de localisation basée sur un système mondial de navigation par satellite est limitée ou empêchée par la source de perturbation, passe devant cette unité de support,
**caractérisé en ce que**
l'événement de détection comprend les paramètres suivants: moment de la détection, bandes de fréquences du signal perturbateur, évolution du niveau du signal perturbateur, caractéristiques du signal perturbateur sous forme d'évolution temporelle de l'intensité du signal en fonction de la fréquence, empreinte digitale contenant un niveau de signal et l'évolution dans le temps des différentes fréquences enregistrées du signal perturbateur, position de l'unité de support de détection au moment de la détection, et déclencher, par l'événement de détection, la création d'un message contenant les paramètres mentionnés, qui est envoyé automatiquement à l'élément de traitement central (5) via une infrastructure de communication,
dans lequel l'élément de traitement central (5) étant conçu stocker le message concernant les événements de détection dans une base de données et indexer automatiquement les messages entrants par lieu et par heure et les examiner pour trouver des points communs concernant les paramètres enregistrés lors de la détection, afin de permettre une individualisation du signal perturbateur, en reliant un événement de détection à d'autres événements de détection à l'aide de l'empreinte digitale du signal perturbateur, afin d'individualiser le signal perturbateur,
dans lequel l'élément de traitement central (5) étant en outre conçu pour déterminer la position de l'unité mobile (20) à suivre à l'aide du signal perturbateur individualisé, en déduisant la position de la source de perturbation à partir de la position de l'unité de support de détection.

2. Système (1) selon la revendication 1,
dans lequel l'unité de traitement (13A, 13B, 13C) est conçue pour générer un horodatage pour une opération de détection d'un signal perturbateur et pour le relier au signal perturbateur détecté avant que le signal perturbateur ne soit transmis à l'unité d'émission/réception.

3. Système (1) selon l'une des revendications précédentes,
dans lequel l'élément de traitement central (5) est conçu pour comparer entre elles les caractéristiques de plusieurs signaux perturbateurs et pour regrouper les signaux perturbateurs en fonction de leurs caractéristiques afin d'attribuer les signaux perturbateurs à des émetteurs parasites individuels.

4. Système (1) selon la revendication 3,
dans lequel l'élément de traitement central (5) est conçu pour générer un profil de mouvement de cet émetteur parasite individuel à partir des signaux perturbateurs attribués à un émetteur parasite individuel.

5. Système (1) selon l'une des revendications précédentes,
dans lequel l'unité de détection (15A, 15B, 15C) est conçue pour enregistrer des informations environnementales supplémentaires en cas de détection d'un signal perturbateur;
dans lequel les informations environnementales supplémentaires étant sélectionnées parmi le groupe: informations d'image ou émissions électromagnétiques ou caractéristiques de rayonnement de composants qui sont en relation avec l'unité mobile à suivre.

6. Système (1) selon l'une des revendications précédentes,
dans lequel l'unité de détermination de position (21) de l'unité mobile à suivre (20) et l'unité de détermination de position (11A, 11B, 11C) d'au moins une de la pluralité d'unités de support (10A, 10B, 10C) sont conçues pour effectuer une détermination de position par satellite.

7. Système (1) selon l'une des revendications précédentes,
dans lequel l'unité de détection (12A, 12B, 12C) est conçue pour détecter un signal perturbateur en captant des ondes électromagnétiques dans une plage de fréquences prédéfinie.

8. Système (1) selon l'une des revendications précédentes,
dans lequel l'unité de traitement étant conçue pour utiliser les signaux de sortie d'une unité de détermination de position de référence afin de détecter un signal perturbateur.

9. Système (1) selon l'une des revendications précédentes,
dans lequel l'unité de détection (15A, 15B, 15C) est conçue pour détecter un signal perturbateur en déterminant les propriétés de corrélation du signal perturbateur et d'un signal de détermination de position sous la forme d'un signal satellite.

10. Système (1) selon l'une des revendications précédentes,
dans lequel l'unité d'émission/réception (12A, 12B, 12C) est conçue pour transmettre des données via un réseau de téléphonie mobile ou un réseau de communication par satellite.

11. Système (1) selon l'une des revendications précédentes,
dans lequel l'élément de traitement central (5) est conçu pour identifier des informations provenant de plusieurs unités de supports concernant le même signal perturbateur afin d'augmenter la précision de la détermination de la position de l'unité mobile à suivre.

12. Système (1) selon l'une des revendications précédentes,
dans lequel le système étant conçu de telle sorte qu'en cas de détection d'un signal perturbateur, des informations sur l'emplacement du signal perturbateur soient transmises à d'autres véhicules afin de signaler d'éventuelles perturbations des unités de détermination de position.
